# EUROPEAN PATENT APPLICATION

(11) **EP 4 385 729 A1**
(43) Date of publication of application: **19.06.2024**
(21) Application number: 22855839.1
(22) Date of filing: 04.08.2022
(51) Int. Cl.: B32B 25/08, B32B 25/18, B32B 27/00, C09J 4/02, C09J 11/04, C09J 11/06, C09J 11/08

(54) **(METH)ACRYLIC ADHESIVE COMPOSITION, LAMINATE, AND TIRE**

(30) Priority: 12.08.2021 JP 2021131710
(71) Applicant: The Yokohama Rubber Co., Ltd., Hiratsuka-shi, Kanagawa 254-8601 (JP)
(72) Inventor: AKIYAMA Hisae, Hiratsuka-shi, Kanagawa 254-8601 (JP); OKAMATSU Takahiro, Hiratsuka-shi, Kanagawa 254-8601 (JP)
(74) Representative: Grünecker Patent- und Rechtsanwälte PartG mbB
(86) International application number: PCT/JP2022/029950
(87) International publication number: WO 2023/017777

(57) **Abstract**

An object of the present invention is to provide a (meth)acrylic adhesive composition that provides excellent adhesion between vulcanized rubbers, a multilayer structure, and a tire. The present invention is a two-part (meth)acrylic adhesive composition, and a multilayer structure and a tire using the (meth)acrylic adhesive composition, the (meth)acrylic adhesive composition containing a polymerizable monomer A having a (meth)acryloyl group, an elastomer component B containing acrylonitrile-butadiene rubber or chlorosulfonated polyethylene, a peroxide-based polymerization initiator C, a reducing agent D, and a filler E, A containing a (meth)acrylic acid alkyl ester monomer (A1), a (meth)acrylic monomer having a hydroxy group (A2), a (meth)acrylic acid monomer (A3), and a crosslinkable (meth)acrylic monomer (A4), a mass ratio (B/A + B) of a total content of B to a total combined content of A and B in the (meth)acrylic adhesive composition being 0.05 or more, and the (meth)acrylic adhesive composition being used for bonding vulcanized rubbers to each other.

## Description

### Technical Field

The present invention relates to a (meth)acrylic adhesive composition, a multilayer structure, and a tire.

### Background Art

In the related art, a two-part acrylic adhesive containing an organic peroxide and a reducing agent has been used in the field of electric and electronic components and the like (for example, Patent Document 1).

### Citation List

### Patent Literature

Patent Document 1: JP 2005 -179548 A

### Summary of Invention

### Technical Problem

In recent years, a system using the Internet of Things (IoT) has been developed in which the air pressure and the like of a tire of an automobile is monitored by attaching a sensor to the tire. The sensor is usually housed in a container made of vulcanized rubber and fixed to the tire with an adhesive.

In general, the surface of vulcanized rubber is often inactive. When an automobile is running, the tires are placed under conditions of high-speed rotation, strong vibration, and high temperature, and it is extremely difficult to bond vulcanized rubbers to each other so as to be able to withstand the above conditions.

Under such circumstances, the inventors of the present invention have prepared a two-part (meth)acrylic adhesive composition with reference to Patent Document 1 and have found that when vulcanized rubbers are bonded to each other with the composition under room temperature conditions, the adhesion between the vulcanized rubbers may be insufficient.

An object of the present invention is to provide a (meth)acrylic adhesive composition that provides excellent adhesion between vulcanized rubbers.

Another object of the present invention is to provide a multilayer structure and a tire.

### Solution to Problem

As a result of intensive studies to solve the above problems, the inventors of the present invention have found that a two-part (meth)acrylic adhesive composition containing a polymerizable monomer having a specific (meth)acryloyl group, an elastomer component containing acrylonitrile-butadiene rubber or chlorosulfonated polyethylene, a peroxide-based polymerization initiator, a reducing agent, and a filler can achieve the desired effects, and have thus completed the present invention.

An embodiment of the present invention is based on the findings described above, and specifically solves the problems described above by the following configurations.
[1] A two-part (meth)acrylic adhesive composition including a first agent and a second agent, the (meth)acrylic adhesive composition containing A to E shown below, A containing (A1) to (A4) shown below, C being contained in the first agent, D being contained in the second agent, A, B, and E each being independently contained in the first agent and/or the second agent, a mass ratio (B/A + B) of a total content of B to a total combined content of A and B in the (meth)acrylic adhesive composition being 0.05 or more, and the (meth)acrylic adhesive composition being used for bonding vulcanized rubbers to each other, where
   A: a polymerizable monomer having a (meth)acryloyl group
      (A1): a (meth)acrylic acid alkyl ester monomer
      (A2): a (meth)acrylic monomer having a hydroxy group
      (A3): a (meth)acrylic acid monomer
      (A4): a crosslinkable (meth)acrylic monomer
   B: an elastomer component containing acrylonitrile-butadiene rubber or chlorosulfonated polyethylene
   C: a peroxide-based polymerization initiator
   D: a reducing agent
   E: a filler.
[2] The (meth)acrylic adhesive composition according to [1], wherein the acrylonitrile-butadiene rubber has a Mooney viscosity at 100°C of 20 or more.
[3] The (meth)acrylic adhesive composition according to [1] or [2], wherein a mass ratio (A2/A) of a total content of the (A2) to a total content of A in the (meth)acrylic adhesive composition is from 0.01 to 0.5.
[4] The (meth)acrylic adhesive composition according to any one of [1] to [3], wherein a mass ratio (A3/A) of a total content of the (A3) to a total content of A in the (meth)acrylic adhesive composition is from 0.005 to 0.5.
[5] The (meth)acrylic adhesive composition according to any one of [1] to [4], wherein a mass ratio (A4/A) of a total content of the (A4) to a total content of A in the (meth)acrylic adhesive composition is from 0.001 to 0.2.
[6] The (meth)acrylic adhesive composition according to any one of [1] to [5], wherein the acrylonitrile-butadiene rubber has an amount of bound nitrile of 10 mass% or more in the acrylonitrile-butadiene rubber.
[7] The (meth)acrylic adhesive composition according to any one of [1] to [6], wherein B further contains a rubber component (bb) having a glass transition temperature of -20°C or less, and a mass ratio (bb/B) of a total content of the (bb) to a total content of B in the (meth)acrylic adhesive composition is more than 0 and less than 0.5, but acrylonitrile-butadiene rubber and chlorosulfonated polyethylene are excluded from the (bb).
[8] A multilayer structure in which vulcanized rubbers are bonded to each other with the (meth)acrylic adhesive composition according to any one of [1] to [7].
[9] The multilayer structure according to [8], wherein one of the vulcanized rubbers includes butyl rubber and/or halogenated butyl.
[10] A tire including a vulcanized tire and a component made of vulcanized rubber bonded to each other with the (meth)acrylic adhesive composition according to any one of [1] to [7].
[11] The tire according to [10], wherein the component is a rubber container incorporating a sensor.

### Advantageous Effects of Invention

The (meth)acrylic adhesive composition of the present invention provides excellent adhesion between vulcanized rubbers.

The present invention can also provide a multilayer structure and a tire.

### Description of Embodiments

Embodiments of the present invention will be described in detail below.

In the present description, (meth)acrylate represents acrylate or methacrylate, (meth)acryloyl represents acryloyl or methacryloyl, and (meth)acryl represents acryl or methacryl.

In the present description, a numerical range represented by using "from ... to ..." includes the numbers before and after "to."

In the present description, unless otherwise indicated, a substance corresponding to each component can be used alone or two or more types of substances can be used in combination. In a case where a component includes two or more types of substances, content of component means the total content of the two or more types of substances.

In the present description, the production method of each component is not particularly limited unless otherwise noted. Examples of the method include a known method.

In the present description, exhibiting more excellent adhesion between vulcanized rubbers may be referred to as exhibiting a more excellent effect of the present invention.

### (Meth)acrylic adhesive composition

A (meth)acrylic adhesive composition according to an embodiment of the present invention (an adhesive composition according to an embodiment of the present invention) is a two-part (meth)acrylic adhesive composition including a first agent and a second agent, the (meth)acrylic adhesive composition containing A to E shown below, A containing (A1) to (A4) shown below, C being contained in the first agent, D being contained in the second agent, A, B, and E each being independently contained in the first agent and/or the second agent, a mass ratio (B/A + B) of a total content of B to a total combined content of A and B in the (meth)acrylic adhesive composition being 0.05 or more, and the (meth)acrylic adhesive composition being used for bonding vulcanized rubbers to each other.
A: a polymerizable monomer having a (meth)acryloyl group
   (A1): a (meth)acrylic acid alkyl ester monomer
   (A2): a (meth)acrylic monomer having a hydroxy group
   (A3): a (meth)acrylic acid monomer
   (A4): a crosslinkable (meth)acrylic monomer
B: an elastomer component containing acrylonitrile-butadiene rubber or chlorosulfonated polyethylene
C: a peroxide-based polymerization initiator
D: a reducing agent
E: a filler

The adhesive composition according to an embodiment of the present invention will be described in detail below.

### A to E

The adhesive composition according to an embodiment of the present invention contains all of the above-described A to E.

In the present description, "A: polymerizable monomer having a (meth)acryloyl group" may be simply referred to as "A". The same applies to B to E, (A1) to (A4), (bb), and (bbb).

### A: Polymerizable monomer having (meth)acryloyl group

In the present invention, "A" is a compound having a (meth)acryloyl group.

In the present invention, A includes all of the above-described (A1) to (A4). (A1) to (A4) belong to "A" and thus have a (meth)acryloyl group. In a preferable aspect, (A1) to (A3) are compounds having one (meth)acryloyl group per molecule.

### (A1): (Meth)acrylic acid alkyl ester monomer

In the present invention, "(A1)" is an alkyl ester of (meth)acrylic acid. The alkyl group of the alkyl ester in (A1) is preferably composed only of a carbon atom and a hydrogen atom.

In (A1), the alkyl group (aliphatic hydrocarbon group) bonded to the ester bond may be, for example, linear, branched, cyclic, or a combination thereof.

Examples of (A1) include (meth)acrylic acid chain alkyl esters, such as methyl (meth)acrylate, ethyl (meth)acrylate, propyl (meth)acrylate, butyl (meth)acrylate, pentyl (meth)acrylate, hexyl (meth)acrylate, 2-ethylhexyl (meth)acrylate, octyl (meth)acrylate, and nonyl (meth)acrylate.

(A1) preferably contains a (meth)acrylic acid chain alkyl ester and more preferably contains methyl methacrylate from the viewpoint of exhibiting a more excellent effect of the present invention, exhibiting excellent initial adhesion, and making it possible to appropriately set the length of pot life.

### (A2): (Meth)acrylic monomer having hydroxy group

In the present invention, (A2) is a compound having a (meth)acryloyl group and a hydroxy group. (A2) does not include (A3).

In (A2), the (meth)acryloyl group and the hydroxy group can be bonded via an organic group. The organic group is not particularly limited.

Examples of (A2) include a compound represented by the following Formula (1).

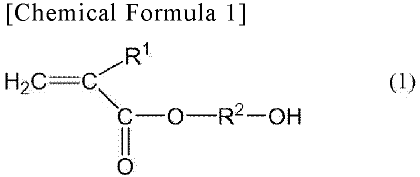

In Formula (1), R¹ represents a hydrogen atom or a methyl group, and R² represents an alkyl group.

The number of carbons of the alkylene group as R² is not particularly limited, but is preferably from 2 to 10, for example.

The alkylene group may be linear, branched, cyclic, or a combination thereof.

Examples of (A2) include 2-hydroxyethyl (meth)acrylate, hydroxypropyl (meth)acrylate, hydroxybutyl (meth)acrylate, and hydroxyhexyl (meth)acrylate.

It is preferable that (A2) contain 2-hydroxyethyl methacrylate from the viewpoint of exhibiting a more excellent effect of the present invention, exhibiting excellent initial adhesion, and making it possible to appropriately set the length of pot life.

### (A3): (Meth)acrylic acid monomer

In the present invention, (A3) is acrylic acid and/or methacrylic acid.

It is preferable that (A3) contain methacrylic acid from the viewpoint of exhibiting a more excellent effect of the present invention, exhibiting excellent initial adhesion, and making it possible to appropriately set the length of pot life.

### (A4): Crosslinkable (meth)acrylic monomer

In the present invention, (A4) is a compound having a plurality of (meth)acryloyl groups.

It is preferable that (A4) contain a compound having two (meth)acryloyl groups.

In (A4), the (meth)acryloyl group can be bonded to an organic group. The organic group is not particularly limited.

It is preferable that (A4) contain a di(meth)acrylate of a diol compound from the viewpoint of exhibiting a more excellent effect of the present invention, exhibiting excellent initial adhesion, and making it possible to appropriately set the length of pot life.

Examples of the diol compound that may constitute (A4) include diols having an aliphatic hydrocarbon group having from 2 to 20 carbons, and the aliphatic hydrocarbon group is preferably linear.

It is preferable that (A4) contain a di(meth)acrylate of a diol having a hydroxy group at both terminals of an aliphatic hydrocarbon group having from 6 to 10 carbons, and more preferably contain 1,9-nonanediol di(meth)acrylate, from the viewpoint of exhibiting a more excellent effect of the present invention, exhibiting excellent initial adhesion, and making it possible to appropriately set the length of pot life.

### (A1/A)

The mass ratio (A1/A) of the total content of (A1) to the total content of A in the adhesive composition according to an embodiment of the present invention is preferably from 0.01 to 0.9 and more preferably from 0.10 to 0.70 from the viewpoint of exhibiting a more excellent effect of the present invention, exhibiting excellent initial adhesion, and making it possible to appropriately set the length of pot life.

### (A2/A)

The mass ratio (A2/A) of the total content of (A2) to the total content of A in the adhesive composition according to an embodiment of the present invention is preferably from 0.01 to 0.5 and more preferably from 0.10 to 0.40 from the viewpoint of exhibiting a more excellent effect of the present invention, exhibiting excellent initial adhesion, and making it possible to appropriately set the length of pot life.

### (A3/A)

The mass ratio (A3/A) of the total content of (A3) to the total content of A in the adhesive composition according to an embodiment of the present invention is preferably from 0.005 to 0.5 and more preferably from 0.05 to 0.20 from the viewpoint of exhibiting a more excellent effect of the present invention, exhibiting excellent initial adhesion, and making it possible to appropriately set the length of pot life.

### (A4/A)

The mass ratio (A4/A) of the total content of (A4) to the total content of A in the adhesive composition according to an embodiment of the present invention is preferably from 0.001 to 0.2 and more preferably from 0.001 to 0.10 from the viewpoint of exhibiting a more excellent effect of the present invention, exhibiting excellent initial adhesion, and making it possible to appropriately set the length of pot life.

### (A1/A2)

The mass ratio (A1/A2) of the total content of (A1) to the total content of (A2) in the adhesive composition according to an embodiment of the present invention is preferably from 1.0 to 10.0 and more preferably from 1.5 to 4.0 from the viewpoint of exhibiting a more excellent effect of the present invention, exhibiting excellent initial adhesion, and making it possible to appropriately set the length of pot life.

### B: Elastomer component

In the present invention, B is an elastomer component. B contains acrylonitrile-butadiene rubber (NBR) or chlorosulfonated polyethylene (CSM). B may contain NBR and CSM.

It is preferable that B contain at least NBR from the viewpoint of exhibiting a more excellent effect of the present invention, exhibiting excellent initial adhesion, and making it possible to appropriately set the length of pot life.

### Acrylonitrile-butadiene rubber

In the present invention, an acrylonitrile-butadiene rubber (NBR) is a rubber obtained through copolymerization of acrylonitrile and butadiene.

### Mooney viscosity

It is preferable that the Mooney viscosity at 100°C (ML₍₁₊₄₎ at 100°C) of the NBR be 20 or more from the viewpoint of exhibiting a more excellent effect of the present invention, exhibiting excellent initial adhesion, and making it possible to appropriately set the length of pot life.

In the present invention, the Mooney viscosity can be measured in accordance with JIS K 6300-1:2013.

### Amount of Bound Nitrile

The amount of bound nitrile (also referred to as amount of bound acrylonitrile or AN amount) in the NBR is preferably 10 mass% or more, more preferably from 15 to 30 mass%, and still more preferably from 15 to 25 mass% in the NBR from the viewpoint of exhibiting a more excellent effect of the present invention, exhibiting excellent initial adhesion, and making it possible to appropriately set the length of pot life.

In the present invention, the amount of bound nitrile can be measured in accordance with JIS K 6451-2:2016 (Kjeldahl method), for example.

### Chlorosulfonated polyethylene

The chlorosulfonated polyethylene (CSM) as B is a polyethylene having chloro and a chlorosulfonyl group.

From the viewpoint of exhibiting a more excellent effect of the present invention, exhibiting excellent initial adhesion, and making it possible to appropriately set the length of pot life, the CSM preferably includes a CSM having a viscosity of a toluene solution of from 200 to 2000 mPa·s and more preferably includes a CSM having a viscosity of a toluene solution of from 300 to 1500 mPa·s at a concentration of 25 mass% and at 23°C.

The chlorine content of the CSM is preferably from 20 to 50 mass% and more preferably from 25 to 45 mass% in the CSM from the viewpoint of exhibiting a more excellent effect of the present invention, exhibiting excellent initial adhesion, and making it possible to appropriately set the length of pot life.

The sulfur atom content of the CSM is preferably from 0.1 to 2.0 mass% and more preferably from 0.5 to 1.5 mass% in the CSM from the viewpoint of exhibiting a more excellent effect of the present invention, exhibiting excellent initial adhesion, and making it possible to appropriately set the length of pot life.

### Rubber component (bb)

Preferably, B further includes a rubber component (bb) having a glass transition temperature of -20°C or less from the viewpoint that the strength (for example, bending strength, the same applies hereinafter) of the adhesive after curing becomes excellent at a low temperature. However, acrylonitrile-butadiene rubber and chlorosulfonated polyethylene are excluded from (bb).

(bb) is not particularly limited as long as it is a diene rubber, and examples thereof include styrene-butadiene rubber (SBR) and butadiene rubber (BR). The SBR may be either an unmodified SBR or a modified SBR.

The glass transition temperature of (bb) is preferably -24°C or less from the viewpoint that the strength of the adhesive after curing becomes excellent at a low temperature.

In the present invention, the glass transition temperature can be measured by a differential scanning calorimeter. For example, the measurement is performed at a temperature rising rate of 20 °C/min, and the glass transition temperature can be calculated from the result by a midpoint method.

When B further includes (bb), the mass ratio (bb/B) of the total content of (bb) to the total content of B in the adhesive composition according to an embodiment of the present invention is preferably more than 0 and less than 0.5 from the viewpoint that the strength of the adhesive after curing becomes excellent at a low temperature.

### (B/A + B)

The mass ratio (B/A + B) of the total content of B to the total combined content of A and B in the adhesive composition according to an embodiment of the present invention is 0.05 or more.

The mass ratio (B/A + B) is preferably from 0.05 to 0.3, more preferably from 0.05 to 0.15, and still more preferably from 0.05 to 0.10 from the viewpoint of exhibiting a more excellent effect of the present invention, exhibiting excellent initial adhesion, and making it possible to appropriately set the length of pot life.

### C: Peroxide-based polymerization initiator

C contained in the adhesive composition according to an embodiment of the present invention is not particularly limited as long as it is a peroxide and preferably contains an organic peroxide because a more excellent effect of the present invention is exhibited.

Examples of the organic peroxide include hydroperoxides, such as t-butyl hydroperoxide, p-menthane hydroperoxide, cumene hydroperoxide, and diisopropylbenzene hydroperoxide; and peroxyesters, such as t-butyl peroxybenzoate, t-butyl peroxylaurate, and t-butyl peroxydecanoate.

Because a more excellent effect of the present invention is exhibited, excellent initial adhesion is exhibited, and the length of pot life can be appropriately set, C preferably contains a hydroperoxide and more preferably contains cumene hydroperoxide.

### (C/A + B)

The mass ratio (C/A + B) of the total content of C to the total combined content of (A) and (B) in the adhesive composition according to an embodiment of the present invention is preferably from 0.001 to 0.1 from the viewpoint of exhibiting a more excellent effect of the present invention, exhibiting excellent initial adhesion, and making it possible to appropriately set the length of pot life.

### D: Reducing agent

D contained in the adhesive composition according to an embodiment of the present invention is not particularly limited as long as it is a reducing agent. Specific examples of the reducing agent include tertiary amines, such as triethylamine and tripropylamine; thiourea derivatives, such as 2-mercaptobenzimidazole, monobenzoylthiourea, and ethylenethiourea; and metal compounds, such as cobalt naphthenate and vanadium compounds.

Specific examples of the vanadium compound include metal oxides, such as vanadium pentoxide; metal soaps, such as vanadyl octenoate, vanadyl naphthenate, and vanadyl stearate; and metal chelates, such as vanadyl acetylacetonate and vanadium acetylacetonate.

D preferably contains a vanadium compound, more preferably contains a chelate of vanadium, and still more preferably contains vanadium acetylacetonate, from the viewpoint of exhibiting a more excellent effect of the present invention, exhibiting excellent initial adhesion, and making it possible to appropriately set the length of pot life.

### Combination of D and A

When D contains a vanadium compound, the vanadium compound is preferably combined with (A3) from the viewpoint of exhibiting excellent solubility of the vanadium compound and exhibiting a more excellent effect of the present invention. As will be described later, D is contained in the second agent. Thus, (A3) is preferably added to at least the second agent, and more preferably (A3) is added to the first agent and the second agent, from the viewpoint that when D contains a vanadium compound, the reducing agent is easily dissolved in the second agent and initial adhesive force is likely to be exhibited.

### (D/A + B)

The mass ratio (D/A + B) of the total content of D to the total combined content of (A) and (B) in the adhesive composition according to an embodiment of the present invention is preferably from 0.0005 to 0.05 from the viewpoint of exhibiting a more excellent effect of the present invention, exhibiting excellent initial adhesion, and making it possible to appropriately set the length of pot life.

### E: Filler

E contained in the adhesive composition according to an embodiment of the present invention is not particularly limited as long as it is a filler.

Examples of E includes white fillers, such as silica, calcium carbonate, talc, and mica, and carbon black.

E preferably contains silica from the viewpoint of exhibiting a more excellent effect of the present invention, exhibiting excellent initial adhesion, and making it possible to appropriately set the length of pot life. The silica is not particularly limited.

### (E/A + B)

The mass ratio (E/A + B) of the total content of E to the total combined content of (A) and (B) in the adhesive composition according to an embodiment of the present invention is preferably from 0.005 to 0.1 from the viewpoint of exhibiting a more excellent effect of the present invention, exhibiting excellent initial adhesion, and making it possible to appropriately set the length of pot life.

### Two-part type

The adhesive composition according to an embodiment of the present invention is a two-part type having a first agent and a second agent.

In the present invention, C is contained in the first agent, and D is contained in the second agent. C is preferably not contained in the second agent, and D is preferably not contained in the first agent.

In the present invention, A, B and E are each independently contained in the first agent and/or the second agent. In a preferable aspect, A, B, and E contained in the first agent and A, B, and E contained in the second agent are the same in formulation and/or have the same total amount of A, B, and E from the viewpoint that the mixing properties between the first agent and the second agent become excellent.

### Optional component

The adhesive composition according to an embodiment of the present invention may further contain components (optional components) other than the components described above. Examples of the optional component include a vinyl-based monomer other than A, a plasticizer, a balloon (hollow body), an anti-aging agent, an antioxidant, a diluent (solvent), a thixotropic agent, a thickener, a dispersant, a pigment, and a polymerization inhibitor.

### Preparation method

The method of preparing the adhesive composition according to an embodiment of the present invention is not particularly limited, but examples thereof include a method in which the components described above are mixed for each of the first agent and the second agent.

The first agent and the second agent may be mixed when the adhesive composition according to an embodiment of the present invention is used.

When the adhesive composition according to an embodiment of the present invention is used, the first agent may be applied to the adhesion surface of one adherend (vulcanized rubber) without mixing the first agent and the second agent, the second agent may be applied to the adhesion surface of another adherend (vulcanized rubber), and then both adherends may be overlapped with each other and bonded.

### Application

The adhesive composition according to an embodiment of the present invention is used for bonding vulcanized rubbers to each other.

Vulcanized rubbers can be bonded by using the adhesive composition according to an embodiment of the present invention.

The adhesive composition according to an embodiment of the present invention is useful as an adhesive for fixing a vulcanized rubber (e.g., a component made of vulcanized rubber) to another vulcanized rubber (e.g., an innerliner of a tire).

### Multilayer structure

The multilayer structure according to an embodiment of the present invention is a multilayer structure in which vulcanized rubbers are bonded to each other with the (meth)acrylic adhesive composition according to an embodiment of the present invention.

The vulcanized rubber to which the adhesive composition of the present invention can be applied is not particularly limited as long as it is vulcanized rubber. Examples thereof include tires and components made of vulcanized rubber (for example, a rubber container for housing a device).

Examples of the vulcanized rubber include vulcanized rubbers containing at least one conjugated diene rubber selected from the group consisting of natural rubber, SBR, BR, butyl rubber, and halogenated butyl rubber. The conjugated diene rubber may be modified. Examples of the halogenated butyl rubber include chlorinated butyl rubber (BIIR).

As necessary, the surface of the vulcanized rubber may be subjected to chemical or physical treatment. Examples of the treatment include a chemical surface treatment such as chlorination treatment and a physical surface treatment such as buffing.

When two vulcanized rubbers are bonded to each other with the adhesive composition according to an embodiment of the present invention, one of the vulcanized rubbers preferably contains butyl rubber (IIR) and/or halogenated butyl rubber. Butyl rubber or the like is contained in, for example, a tire (specifically, for example, an innerliner of a tire).

The other vulcanized rubber is not particularly limited. It may be the same as or different from the vulcanized rubber. Examples of the other vulcanized rubber include vulcanized rubbers containing at least one conjugated diene rubber selected from the group consisting of natural rubber, SBR, BR, butyl rubber, and halogenated butyl rubber. When one of the vulcanized rubbers constitutes a tire, for example, the other vulcanized rubber can constitute a component made of rubber, for example.

### Tire

The tire according to an embodiment of the present invention is a tire in which a vulcanized tire and a component made of vulcanized rubber are bonded to each other with the (meth)acrylic adhesive composition according to an embodiment of the present invention.

Examples of the component made of vulcanized rubber used in the tire according to an embodiment of the present invention include a rubber container incorporating a sensor.

In the tire according to an embodiment of the present invention, in a preferable aspect, the component is fixed to, for example, an innerliner of the tire.

### Usage

The adhesive composition according to an embodiment of the present invention can be cured under conditions of, for example, from 5 to 40°C. When the adhesive composition according to an embodiment of the present invention is cured, the adhesive composition according to an embodiment of the present invention does not have to be heated.

As a method for using the adhesive composition according to an embodiment of the present invention, the adhesive composition according to an embodiment of the present invention (a mixture of the first agent and the second agent, or the first agent and the second agent separately) is applied to a vulcanized rubber (for example, a tire) and/or another vulcanized rubber (for example, a component) to bond the vulcanized rubbers to each other, and they are left under the condition of room temperature (for example, from 5 to 40°C) to cure the adhesive composition according to an embodiment of the present invention and bond the vulcanized rubbers to each other, whereby a multilayer structure (for example, a tire to which a component is fixed) can be produced.

### Example

An embodiment of the present invention will be described below in detail by way of examples. However, an embodiment of the present invention is not limited to such examples.

### Preparation of vulcanized rubber

Vulcanized rubbers 1 and 2 were prepared as follows. The obtained vulcanized rubbers 1 and 2 were used as adherends in the combinations shown in each table.

### Preparation of vulcanized rubber 1

From the components shown in the following "Rubber composition for vulcanized rubber 1," the components other than sulfur and the vulcanization accelerator were kneaded with a 1.8 L sealed mixer for 5 minutes and released to form a master batch. The sulfur and the vulcanization accelerator were added to the obtained master batch and kneaded with an open roll to prepare a rubber composition for vulcanized rubber 1. The rubber component used in each vulcanized rubber 1 is any one of the following natural rubber (NR), SBR, and BR. The rubber components used in vulcanized rubber 1 are listed in each table.

The rubber composition for vulcanized rubber 1 prepared as described above was vulcanized at 170°C for 10 minutes in a mold having a predetermined shape to produce vulcanized rubber 1 (width: 25 mm, width: 10 cm, thickness: 2 mm).

### Rubber composition for vulcanized rubber 1

### Rubber Component

· Natural rubber (NR): 100 parts by mass
· SBR: styrene-butadiene rubber (NIPOL 1502, available from Zeon Corporation)
· BR: butadiene rubber (NIPOL BR1220, available from Zeon Corporation)
· BIIR: Halogenated butyl rubber (brominated isobutylene isoprene rubber, available from ExxonMobil Chemical) 100 parts by mass Other components
· Carbon black (Niteron #GN, available from Shinnikka Carbon Co. Ltd.): 25 parts by mass
· Zinc oxide (Zinc Oxide III, available from Seido Chemical Industry Co., Ltd.): 3 parts by mass
· Sulfur (SULFAX 5, available from Tsurumi Chemical Industry Co., Ltd.): 3 parts by mass
· Vulcanization accelerator (DM-PO, available from OUCHI SHINKO CHEMICAL INDUSTRIAL CO., LTD.): 2 parts by mass

### Preparation of vulcanized rubber 2

From the components shown in the following "Rubber composition for vulcanized rubber 2," the components other than sulfur and the vulcanization accelerator were kneaded with a 1.8 L sealed mixer for 5 minutes and released to form a master batch. The sulfur and the vulcanization accelerator were added to the obtained master batch and kneaded with an open roll to prepare a rubber composition for vulcanized rubber 2. The rubber component used in each vulcanized rubber 2 is any one of the following BIIR and IR. The rubber components used in vulcanized rubber 2 are listed in each table.

The rubber composition for vulcanized rubber 2 prepared as described above was vulcanized at 170°C for 10 minutes in a mold having a predetermined shape to produce vulcanized rubber 1 (width: 25 mm, width: 10 cm, thickness: 2 mm).

### Rubber composition for vulcanized rubber 2

· BIIR: Halogenated butyl rubber (brominated isobutylene isoprene rubber, available from ExxonMobil Chemical) 100 parts by mass
· IIR: Butyl rubber (butyl tuberik (available from Muraoka Rubber Reclaiming Co., Ltd.)) 100 parts by mass
· Carbon black (Niteron #GN, available from Shinnikka Carbon Co. Ltd.): 25 parts by mass
· Zinc oxide (Zinc Oxide III, available from Seido Chemical Industry Co., Ltd.): 3 parts by mass
· Sulfur (SULFAX 5, available from Tsurumi Chemical Industry Co., Ltd.): 3 parts by mass
· Vulcanization accelerator (DM-PO, available from OUCHI SHINKO CHEMICAL INDUSTRIAL CO., LTD.): 2 parts by mass

### Production of adhesive composition

The components listed in the first agent of the following table were used in the compositions (part by mass) listed in the same table and mixed by an agitator, whereby each first agent was prepared. The same applies to the second agent.

The first agent and the second agent prepared as described above were mixed to produce each adhesive composition.

### Evaluation

The following evaluations were performed by using the adhesive compositions produced as described above. The results are shown in the following table.

### Pot life

The viscosity of the adhesive composition immediately after the first agent and the second agent prepared as described above were mixed and the viscosity of the adhesive composition after mixing were measured over time under the condition of 25°C using a B-type viscometer (TVO10, available from Toki Sangyo Co., Ltd.) as a measuring device. The time required from immediately after mixing of the first agent and the second agent until the viscosity of the adhesive composition immediately after mixing was doubled was measured, and this time was taken as the pot life.

In the present invention, the pot life is preferably from 7 to 8 minutes.

### Preparation of test sample

### · Application step

For Table 1, each adhesive composition (mixture of the first agent and the second agent) produced as described above was applied to vulcanized rubber 1 under the condition of 25°C, and vulcanized rubber 1 was overlapped with vulcanized rubber 2 and pressure-bonded to obtain a multilayer structure. The same applies to Table. 2.

For Table 3, under the condition of 25°C, the first agent prepared as described above was applied to vulcanized rubber 1, the second agent prepared as described above was applied to vulcanized rubber 2, and vulcanized rubber 1 and vulcanized rubber 2 were overlapped with each other and pressure-bonded in such a manner that the first agent and the second agent face each other to obtain a multilayer structure.

### · Curing step

Each multilayer structure obtained as described above was aged under conditions of 25°C and 50% RH for 15 minutes or 24 hours to obtain a test sample [a test sample cured for 15 minutes (initial test sample) or a test sample cured for 24 hours (test sample after 24 hours] having an adhesive layer (thickness: 1 mm) of the adhesive composition between vulcanized rubbers 1 and 2.

### 90° Peel test

Under the condition of 25°C, an end of one of the vulcanized rubbers of each test piece obtained as described above was gripped by hand, and a 90° peel test of peeling off the vulcanized rubber at an angle of 90° with respect to the test piece was performed.

A case where any vulcanized rubber of the test sample was cut as a result of the 90° peel test was indicated as "MF," a case where breakage was observed in the adhesive layer of the test sample was indicated as "CF," and a case where interface breakage was observed in the test sample was indicated as "AF". The number after each symbol represents the proportion (%) of the modes of breakage described above with respect to the adhesion area.

### Evaluation criteria for adhesion between vulcanized rubbers

In the present invention, adhesion between vulcanized rubbers was evaluated based on the result of the 90° peel test of the test sample after 24 hours.

When the breakage mode was MF or CF as a result of the 90° peel test of the test sample after 24 hours, the adhesion between the vulcanized rubbers was evaluated as excellent. When the breakage mode was "MF" rather than CF, or when the proportion of MF is larger than the proportion of CF, the adhesion between the vulcanized rubbers is more excellent.

On the other hand, when the breakage mode includes AF as a result of the 90° peel test of the test sample after 24 hours, the adhesion between the vulcanized rubbers was evaluated as poor.

### Evaluation criteria for initial adhesion

The initial adhesion with the adhesive composition according to an embodiment of the present invention was evaluated from the result of the 90° peel test of the initial test sample.

When the breakage mode was MF or CF without including AF as a result of the 90° peel test of the initial test sample, the initial adhesion was evaluated as excellent. When the breakage mode was "MF" rather than CF, or when the proportion of MF was larger than the proportion of CF, the initial adhesion was more excellent.

On the other hand, when the breakage mode includes AF as a result of the 90° peel test of the initial test sample, the initial adhesion was evaluated as poor.

**Table 1**

| Table 1 | | | | Example | | | | | | | | | | | Comparative Example | | | |
|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 1 | 2 | 3 | 4 |
| Adherend | Vulcanized rubber 1 | | | NR | NR | NR | NR | NR | NR | NR | SBR | BR | BIIR | NR | NR | NR | NR | NR |
| | Vulcanized rubber 2 | | | BIIR | BIIR | BIIR | BIIR | BIIR | BIIR | BIIR | BIIR | BIIR | BIIR | IIR | BIIR | BIIR | BIIR | BIIR |
| First agent | A | A1 | MMA | 9.0 | 8.0 | 7.0 | 6.0 | 5.0 | 6.0 | 6.0 | 6.0 | 6.0 | 6.0 | 6.0 | 12.0 | 9.0 | 9.0 | 9.0 |
| | | A2 | HEMA | 1.0 | 2.0 | 3.0 | 4.0 | 5.0 | 4.0 | 4.0 | 4.0 | 4.0 | 4.0 | 4.0 | | 1.5 | 1.5 | 1.5 |
| | | A3 | MAA | 1.0 | 1.0 | 1.0 | 1.0 | 1.0 | 1.0 | 1.0 | 1.0 | 1.0 | 1.0 | 1.0 | | 0.5 | 0.5 | 0.5 |
| | | A4 | NGDMA | 1.0 | 1.0 | 1.0 | 1.0 | 1.0 | 1.0 | 1.0 | 1.0 | 1.0 | 1.0 | 1.0 | | 1.0 | 1.0 | 1.0 |
| | B | b1 | NBR | 1.0 | 1.0 | 1.0 | 1.0 | 2.0 | | | 1.0 | 1.0 | 1.0 | 1.0 | 1.0 | | | |
| | | b2 | NBR | | | | | | 1.0 | | | | | | | | | |
| | | b3 | NBR | | | | | | | 1.0 | | | | | | | | |
| | | bb1 | SBR | | | | | | | | | | | | | 1.0 | | |
| | | bb2 | Modified SBR | | | | | | | | | | | | | | 1.0 | |
| | | bb3 | BR | | | | | | | | | | | | | | | 1.0 |
| | C | CHP | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | E | Silica | | 0.8 | 0.8 | 0.8 | 0.8 | 0.4 | 0.8 | 0.8 | 0.8 | 0.8 | 0.8 | 0.8 | 0.8 | 0.8 | 0.8 | 0.8 |
| Second agent | A | A1 | MMA | 9.0 | 8.0 | 7.0 | 6.0 | 5.0 | 6.0 | 6.0 | 6.0 | 6.0 | 6.0 | 6.0 | 12.0 | 9.0 | 9.0 | 9.0 |
| | | A2 | HEMA | 1.0 | 2.0 | 3.0 | 4.0 | 5.0 | 4.0 | 4.0 | 4.0 | 4.0 | 4.0 | 4.0 | 0.0 | 1.5 | 1.5 | 1.5 |
| | | A3 | MAA | 1.0 | 1.0 | 1.0 | 1.0 | 1.0 | 1.0 | 1.0 | 1.0 | 1.0 | 1.0 | 1.0 | 0.0 | 0.5 | 0.5 | 0.5 |
| | | A4 | NGDMA | 1.0 | 1.0 | 1.0 | 1.0 | 1.0 | 1.0 | 1.0 | 1.0 | 1.0 | 1.0 | 1.0 | 0.0 | 1.0 | 1.0 | 1.0 |
| | B | b1 | NBR | 1.0 | 1.0 | 1.0 | 1.0 | 2.0 | 0.0 | 0.0 | 1.0 | 1.0 | 1.0 | 1.0 | 1.0 | 0.0 | 0.0 | 0.0 |
| | | b2 | NBR | 0.0 | 0.0 | 0.0 | 0.0 | 0.0 | 1.0 | 0.0 | 0.0 | 0.0 | 0.0 | 0.0 | 0.0 | 0.0 | 0.0 | 0.0 |
| | | b3 | NBR | 0.0 | 0.0 | 0.0 | 0.0 | 0.0 | 0.0 | 1.0 | 0.0 | 0.0 | 0.0 | 0.0 | 0.0 | 0.0 | 0.0 | 0.0 |
| | | bb1 | SBR | 0.0 | 0.0 | 0.0 | 0.0 | 0.0 | 0.0 | 0.0 | 0.0 | 0.0 | 0.0 | 0.0 | 0.0 | 1.0 | 0.0 | 0.0 |
| | | bb2 | Modified SBR | 0.0 | 0.0 | 0.0 | 0.0 | 0.0 | 0.0 | 0.0 | 0.0 | 0.0 | 0.0 | 0.0 | 0.0 | 0.0 | 1.0 | 0.0 |
| | | bb3 | BR | 0.0 | 0.0 | 0.0 | 0.0 | 0.0 | 0.0 | 0.0 | 0.0 | 0.0 | 0.0 | 0.0 | 0.0 | 0.0 | 0.0 | 1.0 |
| | D | VO(C₅H₇O₂)₂ | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| | E | Silica | | 0.8 | 0.8 | 0.8 | 0.8 | 0.4 | 0.8 | 0.8 | 0.8 | 0.8 | 0.8 | 0.8 | 0.8 | 0.8 | 0.8 | 0.8 |
| B/A + B in composition (mass ratio) | | | | 0.08 | 0.08 | 0.08 | 0.08 | 0.14 | 0.08 | 0.08 | 0.08 | 0.08 | 0.08 | 0.08 | 0.08 | 0.08 | 0.08 | 0.08 |
| Pot life | | | | 5 min | 7 min | 8 min | 8 min | 3 min | 5 min | 4 min | 8 min | 8 min | 8 min | 8 min | 5 min | 14 min | 11 min | 14 min |
| 90° Pool test (initial test sample)/breakage state | | | | MF100 | MF100 | MF100 | MF100 | MF80 | MF90 | MF80 | MF100 | MF100 | MF100 | MF100 | AF100 | CF40 | CF20 | CF40 |
| | | | | | | | | CF20 | CF10 | CF20 | | | | | | AF60 | AF80 | AF60 |
| 90° Peel test (test sample after 24 hours)/breakage state | | | | MF100 | MF100 | MF100 | MF100 | MF100 | MF100 | MF100 | MF100 | MF100 | MF100 | MF100 | AF100 | AF100 | AF100 | AF100 |

**Table 2**

| Table 2 | | | | Example | | | | | | |
|---|---|---|---|---|---|---|---|---|---|---|
| | | | | 12 | 13 | 14 | 15 | 16 | 17 | 18 |
| Adherend | Vulcanized rubber 1 | | | NR | NR | NR | NR | NR | NR | NR |
| | Vulcanized rubber 2 | | | BIIR | BIIR | BIIR | BIIR | BIIR | BIIR | IIR |
| First agent | A | A1 | MMA | 10.0 | 7.0 | 10.0 | 10.0 | 10.0 | 10.0 | 10.0 |
| | | A2 | HEMA | 1.0 | 3.0 | 1.0 | 1.0 | 1.0 | 1.0 | 1.0 |
| | | A3 | MAA | 0.5 | 1.0 | 0.5 | 0.5 | 0.5 | 0.5 | 0.5 |
| | | A4 | NGDMA | 0.5 | 1.0 | 0.5 | 0.5 | 0.5 | 0.5 | 0.5 |
| | B | b1 | NBR | 0.7 | 0.9 | | 0.7 | 0.8 | 0.7 | 0.7 |
| | | b3 | NBR | | | 0.7 | | | | |
| | | bb1 | SBR | 0.3 | 0.1 | 0.3 | | | | 0.3 |
| | | bb2 | Modified SBR | | | | 0.3 | 0.2 | | |
| | | bb3 | BR | | | | | | 0.3 | |
| | C | CHP | | 0.5 | 0.5 | 0.5 | 0.5 | 0.5 | 0.5 | 0.5 |
| | E | Silica | | 0.8 | 0.8 | 0.8 | 0.8 | 0.8 | 0.8 | 0.8 |
| Second agent | A | A1 | MMA | 10.0 | 7.0 | 10.0 | 10.0 | 10.0 | 10.0 | 10.0 |
| | | A2 | HEMA | 1.0 | 3.0 | 1.0 | 1.0 | 1.0 | 1.0 | 1.0 |
| | | A3 | MAA | 0.5 | 1.0 | 0.5 | 0.5 | 0.5 | 0.5 | 0.5 |
| | | A4 | NGDMA | 0.5 | 1.0 | 0.5 | 0.5 | 0.5 | 0.5 | 0.5 |
| | B | b1 | NBR | 0.7 | 0.9 | 0.0 | 0.7 | 0.8 | 0.7 | 0.7 |
| | | b3 | NBR | 0.0 | 0.0 | 0.7 | 0.0 | 0.0 | 0.0 | 0.0 |
| | | bb1 | SBR | 0.3 | 0.1 | 0.3 | 0.0 | 0.0 | 0.0 | 0.3 |
| | | bb2 | Modified SBR | 0.0 | 0.0 | 0.0 | 0.3 | 0.2 | 0.0 | 0.0 |
| | | bb3 | BR | 0.0 | 0.0 | 0.0 | 0.0 | 0.0 | 0.3 | 0.0 |
| | D | VO(C₅H₇O₂)₂ | | 0.05 | 0.05 | 0.05 | 0.05 | 0.05 | 0.05 | 0.05 |
| | E | Silica | | 0.8 | 0.8 | 0.8 | 0.8 | 0.8 | 0.8 | 0.8 |
| B/A + B in composition (mass ratio) | | | | 0.08 | 0.08 | 0.08 | 0.08 | 0.08 | 0.08 | 0.08 |
| Pot life | | | | 11 min | 9 min | 7 min | 10 min | 9 min | 11 min | 11 min |
| 90° Peel test (initial test sample)/breakage state | | | | MF70 | MF100 | MF60 | MF80 | MF90 | MF70 | MF70 |
| | | | | CF30 | | CF40 | CF20 | CF10 | CF30 | CF30 |
| 90° Peel test (test sample after 24 hours)/breakage state | | | | MF100 | MF100 | MF100 | MF100 | MF100 | MF100 | MF100 |

**Table 3**

| Table 3 | | | | Example | | | | | | | | | | | Comparative Example |
|---|---|---|---|---|---|---|---|---|---|---|---|---|---|---|---|
| | | | | 19 | 20 | 21 | 22 | 23 | 24 | 25 | 26 | 27 | 28 | 29 | 5 |
| Adherend | Vulcanized rubber 1 | | | NR | NR | NR | NR | NR | NR | NR | SBR | BR | BIIR | NR | NR |
| | Vulcanized rubber 2 | | | BIIR | BIIR | BIIR | BIIR | BIIR | BIIR | BIIR | BIIR | BIIR | BIIR | IIR | BIIR |
| First agent Second agent | A | A1 | MMA | 9.0 | 8.0 | 7.0 | 6.0 | 5.0 | 6.0 | 6.0 | 6.0 | 6.0 | 6.0 | 6.0 | 12.0 |
| | | A2 | HEMA | 1.0 | 2.0 | 3.0 | 4.0 | 5.0 | 4.0 | 4.0 | 4.0 | 4.0 | 4.0 | 4.0 | |
| | | A3 | MAA | 1.0 | 1.0 | 1.0 | 1.0 | 1.0 | 1.0 | 1.0 | 1.0 | 1.0 | 1.0 | 1.0 | |
| | | A4 | NGDMA | 1.0 | 1.0 | 1.0 | 1.0 | 1.0 | 1.0 | 1.0 | 1.0 | 1.0 | 1.0 | 1.0 | |
| | B | b1 | NBR | | | | | | | 0.5 | | | | | |
| | | bbb1 | CSM | 1.0 | 1.0 | 1.0 | 1.0 | 2.0 | | 0.5 | 1.0 | 1.0 | 1.0 | 1.0 | 1.0 |
| | | bbb2 | CSM | | | | | | 1.0 | | | | | | |
| | C | CHP | | 0.5 | 0.5 | 0.5 | 0.5 | 0.5 | 0.5 | 0.5 | 0.5 | 0.5 | 0.5 | 0.5 | 0.5 |
| | E | Silica | | 0.8 | 0.8 | 0.8 | 0.8 | 0.4 | 0.8 | 0.8 | 0.8 | 0.8 | 0.8 | 0.8 | 0.8 |
| | A | A1 | MMA | 9.0 | 8.0 | 7.0 | 6.0 | 5.0 | 6.0 | 6.0 | 6.0 | 6.0 | 6.0 | 6.0 | 12.0 |
| | | A2 | HEMA | 1.0 | 2.0 | 3.0 | 4.0 | 5.0 | 4.0 | 4.0 | 4.0 | 4.0 | 4.0 | 4.0 | 0.0 |
| | | A3 | MAA | 1.0 | 1.0 | 1.0 | 1.0 | 1.0 | 1.0 | 1.0 | 1.0 | 1.0 | 1.0 | 1.0 | 0.0 |
| | | A4 | NGDMA | 1.0 | 1.0 | 1.0 | 1.0 | 1.0 | 1.0 | 1.0 | 1.0 | 1.0 | 1.0 | 1.0 | 0.0 |
| | **B** | b1 | NBR | 0.0 | 0.0 | 0.0 | 0.0 | 0.0 | 0.0 | 0.5 | 0.0 | 0.0 | 0.0 | 0.0 | 0.0 |
| | | bbb1 | CSM | 1.0 | 1.0 | 1.0 | 1.0 | 2.0 | 0.0 | 0.5 | 1.0 | 1.0 | 1.0 | 1.0 | 1.0 |
| | | bbb2 | CSM | 0.0 | 0.0 | 0.0 | 0.0 | 0.0 | 1.0 | 0.0 | 0.0 | 0.0 | 0.0 | 0.0 | 0.0 |
| | **D** | VO(C₅H₇O₂)₂ | | 0.05 | 0.05 | 0.05 | 0.05 | 0.05 | 0.05 | 0.05 | 0.05 | 0.05 | 0.05 | 0.05 | 0.05 |
| | E | Silica | | 0.8 | 0.8 | 0.8 | 0.8 | 0.4 | 0.8 | 0.8 | 0.8 | 0.8 | 0.8 | 0.8 | 0.8 |
| B/A + B in composition (mass ratio) | | | | 0.08 | 0.08 | 0.08 | 0.08 | 0.14 | 0.08 | 0.08 | 0.08 | 0.08 | 0.08 | 0.08 | 0.08 |
| Pot life | | | | 3 min | 6 min | 7 min | 7 min | 3 min | 7 min | 8 min | 7 min | 7 min | 7 min | 7 min | 3 min |
| 90° Peel test (initial test sample)/breakage state | | | | MF100 | MF100 | MF100 | MF100 | MF100 | MF100 | MF100 | MF100 | MF100 | MF100 | MF100 | AF100 |
| 90° Peel test (test sample after 24 hours)/breakage state | | | | MF100 | MF100 | MF100 | MF100 | MF100 | MF100 | MF100 | MF100 | MF100 | MF100 | MF100 | AF100 |

The details of each component listed in the first agent and the second agent of each table are as follows.
A
   · A1 MMA: Methyl methacrylate, available from Tokyo Chemical Industry Co., Ltd.
   · A2 HEMA: 2-Hydroxyethyl methacrylate, available from Tokyo Chemical Industry Co., Ltd.
   · A3 MAA: Methacrylic acid, available from Tokyo Chemical Industry Co., Ltd.
   · A4 NGDMA: 1,9-Nonanediol dimethacrylate, available from Tokyo Chemical Industry Co., Ltd.
B
   (NBR)
      · b1 NBR: Acrylonitrile-butadiene rubber, PERBUNAN 1846F available from LANXESS, amount of bound nitrile: 18 mass%, ML₍₁₊₄₎ at 100°C: 45
      · b2 NBR: Acrylonitrile-butadiene rubber, NIPOL DN302 available from Zeon Corporation, amount of bound nitrile: 27.5 mass%, ML₍₁₊₄₎ at 100°C: 62.5
      · b3 NBR: Acrylonitrile-butadiene rubber, NIPOL 1042 available from Zeon Corporation, amount of bound nitrile: 33.5 mass%, ML₍₁₊₄₎ at 100°C: 77.5
   (CSM)
      · bbb1 CSM: Chlorosulfonated polyethylene rubber, TOSO-CSM TS-340 available from Tosoh Corporation, chlorine content: 43 mass%, sulfur content: 1.1 mass%, viscosity^{*1}: 350 mPa·s
      · bbb2 CSM: Chlorosulfonated polyethylene rubber, TOSO-CSM CN-1500 available from Tosoh Corporation, chlorine content: 30 mass%, sulfur content: 1.4 mass%, viscosity^{*1}: 1400 mPa·s
         The viscosities^{*1} of bbb1 and bbb2 are, as described above, the viscosity of a toluene solution at a concentration of 25 mass% measured under the condition of from 23 to 25°C using a Brookfield viscometer.
   (Rubber component (bb) having Tg of -20°C or less)
      · bb1 SBR: Styrene-butadiene rubber, NIPOL 1502 available from Zeon Corporation, Tg: -51°C
      · bb2 terminal-modified SBR: Terminal-modified styrene-butadiene rubber, Nipol NS116R available from Zeon Corporation, Tg: -24°C
      · bb3 BR: Butadiene rubber, NIPOL BR1220 available from Zeon Corporation, Tg: -105°C
C
   · CHP: Cumene hydroperoxide (containing about 20% aromatic hydrocarbon) available from Tokyo Chemical Industry Co., Ltd.
D
   · VO(C₅H₇O₂)₂: Vanadyl acetylacetonate, available from Tokyo Chemical Industry Co., Ltd.
E
   · Silica: AEROSIL R972 available from Evonik Industries AG

Table 1 shows the evaluation results when (B) contains NBR (Examples 1 to 11 and Comparative Examples 1 to 4). In Table 1, the formulation of the adhesive composition of Example 4 is the same as that of Examples 8 to 11.

Table 2 shows the evaluation results when (B) contains NBR and further contains (bb) (Examples 12 to 18). Comparative Examples 1 to 4 are common to Table 1 and Table 2 but are omitted here.

Table 3 shows the evaluation results when (B) contains CSM, or CSM and NBR (Examples 19 to 29 and Comparative Example 5). In Table 3, the formulation of the adhesive composition of Example 22 is the same as that of Examples 26 to 29. In Example 25, NBR and CSM were used in combination. Comparative Examples 1 to 4 are common to Table 1 and Table 3 but are omitted here.

As can be seen from the results shown in Tables 1 to 3, Comparative Examples 1 and 5, which did not contain (A2) to (A4), exhibited poor adhesion between the vulcanized rubbers. Comparative Examples 2 to 4, in which NBR and CSM were excluded, exhibited poor adhesion between the vulcanized rubbers.

On the other hand, in the adhesive composition according to an embodiment of the present invention (Examples 1 to 29), regardless of whether (B) was NBR, CSM, or a combination of both, the result of the 90° peel test of the test sample after 24 hours was MF100%, and thus the adhesion between the vulcanized rubbers was excellent.

Regarding the 90° peel test of the initial test sample, since the breakage state of the initial test sample after the 90° peel test did not include AF in any of Examples 1 to 29, the adhesive composition according to an embodiment of the present invention was able to develop initial adhesive force in a short time (curing time: 15 minutes or less) under the condition of normal temperature (from 5°C to 40°C), and was able to sufficiently bond the vulcanized rubbers to each other in the initial stage. The adhesive composition according to an embodiment of the present invention had excellent initial adhesion as described above.

Regarding the pot life, from the results of Examples 1 to 18, as the AN amount of the NBR was smaller and/or the Mooney viscosity of the NBR was smaller, the pot life was able to be made longer (comparison between Examples 4, 6, and 7 in Table 1; and Examples 12 and 14 in Table 2).

From the results of the pot life of Examples 1 to 29, when the mass ratio of A1/A2 was from 1.5 to 4.0, the pot life was able to be made to be a more appropriate length (Examples 2 to 4 and 8 to 11 in Table 1; Examples 20 to 22 and 26 to 29 in Table 3).

## Claims

1. A two-part (meth)acrylic adhesive composition, comprising:
a first agent; and
a second agent;
the (meth)acrylic adhesive composition containing A to E shown below,
A containing (A1) to (A4) shown below,
C being contained in the first agent,
D being contained in the second agent,
A, B, and E each being independently contained in the first agent and/or the second agent,
a mass ratio (B/A + B) of a total content of B to a total combined content of A and B in the (meth)acrylic adhesive composition being 0.05 or more, and
the (meth)acrylic adhesive composition being used for bonding vulcanized rubbers to each other, where
A: a polymerizable monomer having a (meth)acryloyl group
(A1): a (meth)acrylic acid alkyl ester monomer
(A2): a (meth)acrylic monomer having a hydroxy group
(A3): a (meth)acrylic acid monomer
(A4): a crosslinkable (meth)acrylic monomer
B: an elastomer component containing acrylonitrile-butadiene rubber or chlorosulfonated polyethylene
C: a peroxide-based polymerization initiator
D: a reducing agent
E: a filler.

2. The (meth)acrylic adhesive composition according to claim 1, wherein the acrylonitrile-butadiene rubber has a Mooney viscosity at 100°C of 20 or more.

3. The (meth)acrylic adhesive composition according to claim 1 or 2, wherein a mass ratio (A2/A) of a total content of the (A2) to a total content of A in the (meth)acrylic adhesive composition is from 0.01 to 0.5.

4. The (meth)acrylic adhesive composition according to any one of claims 1 to 3, wherein a mass ratio (A3/A) of a total content of the (A3) to a total content of A in the (meth)acrylic adhesive composition is from 0.005 to 0.5.

5. The (meth)acrylic adhesive composition according to any one of claims 1 to 4, wherein a mass ratio (A4/A) of a total content of the (A4) to a total content of A in the (meth)acrylic adhesive composition is from 0.001 to 0.2.

6. The (meth)acrylic adhesive composition according to any one of claims 1 to 5, wherein the acrylonitrile-butadiene rubber has an amount of bound nitrile of 10 mass% or more in the acrylonitrile-butadiene rubber.

7. The (meth)acrylic adhesive composition according to any one of claims 1 to 6, wherein
B further contains a rubber component (bb) having a glass transition temperature of -20°C or less, and
a mass ratio (bb/B) of a total content of the (bb) to a total content of B in the (meth)acrylic adhesive composition is more than 0 and less than 0.5, but
acrylonitrile-butadiene rubber and chlorosulfonated polyethylene are excluded from the (bb).

8. A multilayer structure in which vulcanized rubbers are bonded to each other with a (meth)acrylic adhesive composition described in any one of claims 1 to 7.

9. The multilayer structure according to claim 8, wherein one of the vulcanized rubbers comprises butyl rubber and/or halogenated butyl.

10. A tire comprising a vulcanized tire and a component made of vulcanized rubber bonded to each other with a (meth)acrylic adhesive composition described in any one of claims 1 to 7.

11. The tire according to claim 10, wherein the component is a rubber container incorporating a sensor.
